# EUROPÄISCHE PATENTSCHRIFT

(11) **EP 1 108 384 B1**
(45) Veröffentlichungstag und Bekanntmachung des Hinweises auf die Patenterteilung: **24.07.2002**
(21) Anmeldenummer: 00127602.1
(22) Anmeldetag: 15.12.2000
(51) Int. Cl.: A47J 27/16

(54) **Haushaltgerät zum drucklosen Dampfgaren**
Household appliance for steam cooking under atmospheric pressure
Appareil domestique pour cuire à vapeur sous pression atmosphérique

(30) Priorität: 16.12.1999 DE 19960743
(43) Veröffentlichungstag der Anmeldung: 20.06.2001
(73) Patentinhaber: Imperial-Werke oHG, 32257 Bünde (DE)
(72) Erfinder: Berger, Uwe, 32278 Kirchlengern (DE); Dittrich, Hartmut, Dr., 32257 Bünde (DE); Metz, Thomas, 32257 Bünde (DE)
(74) Vertreter: Neisen, Jürgen

(56) Entgegenhaltungen:
- EP-A- 0 695 503
- DE-A- 3 441 767
- US-A- 5 404 803
- US-A- 5 680 810

## Beschreibung

Die Erfindung betrifft ein Haushaltgerät zum drucklosen Dampfgaren mit einem Garraum, einem Wasserbehälter und einer in der Dampferzeugereinrichtung angeordneten Heizeinrichtung.

Ein derartiges Haushaltgerät ist beispielsweise aus der DE 197 41 881 A1 bekannt. Dort ist ein druckloses Dampfgargerät offenbart, bei dem neben dem Garraum ein entnehmbarer Wasserbehälter angeordnet ist. Hinter dem Wasserbehälter befindet sich getrennt von diesem eine Dampferzeugereinrichtung, welche eine Dampfverbindung zum Garraum aufweist. Kaltes Wasser gelangt aus dem Wasserbehälter über ein Ventil zur Dampferzeugereinrichtung, wo es bis zum Verdampfen erhitzt wird. Wasser gelangt bedarfsweise nach und nach zur Dampferzeugereinrichtung. Es wird immer nur so viel Wasser erhitzt und verdampft, wie notwendig. Diese Anordnung hat jedoch den Nachteil, dass das Ventil zwischen beiden Einrichtungen eine Problemzone darstellt. Durch Materialverschleiß o. Ä. kann das Ventil undicht werden und ein unkontrollierter Wasseraustritt in das Gerät ist die Folge.

Die DE 44 01 642 A1 offenbart ein druckloses Dampfgarbecken, welches gleichzeitig ein Wasserreservoir über einer Heizeinrichtung aufweist, wobei das Wasser immer komplett erhitzt werden muss, bevor Dampf zum Garen abgegeben werden kann. Der Nachteil dieser Vorrichtung besteht darin, dass kein separater Garraum vorhanden ist und ein Verdampfen erst nach einer vollständigen Erhitzung des Wassers im Füllraum erfolgt. Dadurch ergibt sich ein hoher Energieaufwand zum Garen. Außerdem ist ein Festwasseranschluss notwendig, um den Wasservorrat aufzufüllen bzw. das beim Garen nicht benötigte Wasser nach Beendigung des Garvorganges abzulassen. Ein Festwasseranschluss hat immer den Nachteil, dass bei einer vorhandenen Küchengestaltung ein nachträglicher Einbau eines derartigen Gerätes nur mit größeren Umbauarbeiten möglich ist.

In der EP 695 503 B1 ist ein Backofen zum Dampfgaren gemäß dem Oberbegriff des Anspruchs 1 offenbart, bei welchem eine entnehmbare Verdampfungseinheit und ein darin angeordneter entnehmbarer Wasserbehälter außerhalb des Garraumes angeordnet sind. Die Verdampfungseinheit ist mit dem darin eingeschobenen und separat entnehmbaren Wasserbehälter unterhalb des Garraumes angeordnet. Dadurch ist eine Entnahme des Wasserbehälters auch während des Betriebes möglich, während die Verdampfungseinheit im Backofen verbleibt. Ein wesentlicher Nachteil dieser Anordnung ist aber u.a. darin zu sehen, dass die Verdampfungseinrichtung ein doppelt so großes Volumen besitzen muss, wie der Wasserbehälter, damit die Dichtigkeit gewährleistet werden kann. Ein Nachfüllen des Wasserbehälters ist aufgrund seines geringen Volumens auch während des Garens zumeist unumgänglich, wenn nicht das Bauvolumen des Backofens vergrößert werden soll. Weiterhin ist von Nachteil, dass der Verdampfungsbehälter mechanisch verschlossen werden muss. Dadurch ist in dem Bereich auch mindestens eine Deckeldichtung notwendig, die ausgewechselt werden muss. Weiterhin sind durch die Anordnung der Dampferzeugerheizung flexible Leitungen zur gehäusefesten Elektronik notwendig. Durch die getrennte Anordnung von einer Wasserschublade in einem Wasserschubladen-Führungsrohr und einem Verdampfungsbehälter sind Schwimmer oder ähnliche Zuflussregelungen für einen Wasserzulauf zum Verdampfungsbehälter notwendig, die defekt werden oder klemmen können. Eine Schwimmerdichtung, die den beweglichen Schwimmer abdichten soll, liegt unterhalb des Wasserstandes und ist daher im Laufe der Zeit gegen Undichtigkeit nicht vollständig sicher. Es kann bei Undichtigkeit zu viel Wasser in den Verdampfungsbehälter gelangen und die Aufheizzeiten für eine Dampferzeugung verlängern sich und es kommt zu einem unnötig erhöhten Energieverbrauch. Außerdem weist eine derartige Anordnung nur eine optische Füllstandsanzeige auf, bei der ein trockener Verdampfungsbehälter schnell übersehen werden kann.

Der Erfindung stellt sich somit das Problem, ein druckloses Dampfgargerät mit Dampferzeugereinheit und Wasserbehälter bei Beibehaltung bisheriger Bauvolumen zu schaffen, bei welchem ein gegen Leckagen redundantes System entsteht und ein Nachfüllen des Wasserbehälters während eines normalen Garvorgangs nicht mehr erforderlich ist. Weiterhin soll zum Füllen, Entleeren und Warten eine mühelose Entnahme sowohl des Wasserbehälters als auch der Dampferzeugereinheit aus dem Dampfgargerät und ein energieoptimaler Betrieb gewährleistet sein.

Erfindungsgemäß wird dieses Problem durch ein Dampfgargerät mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einer kompakten Bauweise insbesondere darin, dass ein Behälter als Dampferzeuger mit Wasserbehälter ausgebildet ist, welcher mit einem Handgriff aus dem Gerät entnehmbar ist. Als besonders vorteilhaft anzusehen ist ein Behälter, der je nach Bauart innerhalb oder außerhalb des Garraums angeordnet ist und eine an seinen Einsatzort angepasste Ausgestaltung aufweist. An dem Behälter ist ein elektrischer Steckkontakt angeordnet, über welchen die Heizeinrichtung für die Dampferzeugung mit einer Spannungsversorgung verbunden ist. Mindestens eine Dichtung trennt dampfseitig wenigstens den elektrischen Steckkontakt vom Behälter. Der Behälter weist in einer vorteilhaften Ausgestaltung mindestens eine Öffnung auf, welche oberhalb eines gekennzeichneten, maximalen Füllstandes angeordnet ist. Diese ist sowohl zum Einfüllen von Wasser als auch für den Dampfauslaß zum Garraum verwendbar. Ein unkontrollierter Wasser- bzw. Dampfaustritt aus dem Behälter in das Gerätegehäuse ist durch den ansonsten geschlossenen Behälter unterbunden. In einer besonders vorteilhaften Ausgestaltung enthält der Behälter mindestens eine Wand zur Trennung von Kalt- und Warmwasser. Eine besondere Ausgestaltung sieht zur Trennung von kaltem und erhitztem Wasser eine mindestens doppelwandige Ausbildung des Behälters und/oder der Trennwand vor, wobei die Heizeinrichtung im unteren Bereich zwischen den Wandungen angeordnet ist.

Als besonderer Vorteil ist es weiterhin anzusehen, dass der Dampfweg zum Garraum derart ausgestaltet ist, dass eine Rückführung von mit dem Dampf mitgerissenen Wassertropfen vor Erreichen des Garraumes zur Heizeinrichtung bzw. zum erhitzten Wasser erfolgt. Es ist weiterhin vorteilhaft, direkt an der Heizeinrichtung bzw. am Trägermaterial eine mit einer Elektronik in Verbindung stehende Einrichtung zur Füllstandsüberwachung anzuordnen. Dazu bietet sich insbesondere ein PTC-Widerstand an.

Besonders energiesparend ist die Anordnung des Behälters im Bodenbereich des Garraums. Dort gelangt Kondensat von den Garraumwänden wieder in den Behälter und wird je nach Bedarf entweder erneut verdampft oder nach Beendigung des Garvorganges aus dem Behälter entleert. Damit verringert sich die benötigte Wassermenge und weniger Zeit und Energie sind notwendig. Der Behälter weist in einer besonderen Ausgestaltung im unteren Bereich eine verschließbare Öffnung auf. Von außen kann dadurch das warme, von den Garraumwänden abtropfende Kondensat wieder zurück in den Behälter mit dem sauberen Wasser gelangen.

Der Behälter ist in einer vorteilhaften Ausgestaltung mit einer Kondensatauffangschale überdeckt, welche das vom Gargut tropfende Kondensat aufnimmt, damit das im Wasserbehälter vorhandene Wasser nicht verschmutzt. Besonders vorteilhaft ist es, wenn die Kondensatauffangschale den Behälter nur so weit überdeckt, dass das von den Garraumwänden tropfende Kondensat entweder direkt in den Behälter oder auf den Boden gelangen kann, wobei es von dort von unten wieder durch die verschließbare Öffnung in den Behälter eindringt.

Bei Anordnung des Behälters außerhalb des Garraumes ist es vorteilhaft, wenn in dem Behälter ein separates Kaltwassergefäß integriert ist. In einer besonderen Ausgestaltung ist unterhalb des Kaltwassergefäßes und oberhalb der Heizeinrichtung eine thermische Trennungsvorrichtung angeordnet, welche vorteilhaft als Schwimmer, Magnetventil oder Vogeltränke ausgebildet ist. Die Trennungsvorrichtung liegt nicht direkt auf der Heizeinrichtung auf. Eine einfache Ausführung der Trennung ohne bewegliche Teile ist eine beabsichtigte Undichtigkeit mit einem kleinen Querschnitt zwischen dem Kaltwasser- und dem Warmwassergefäß.

Ein Ausführungsbeispiel der Erfindung ist in den Zeichnungen rein schematisch dargestellt und wird nachfolgend näher beschrieben. Es zeigen:
- Figur 1: Dampfgargerät mit seitlich neben dem Garraum angeordneten Behälter
- Figur 2: Ausschnitt mit Sicht auf eine Seitenwand des Garraumes mit Dampfverbindung vom Behälter
- Figur 3: Schnitt durch einen seitlich neben dem Garraum anzuordnenden Behälter
- Figur 4: Dampfgargerät mit einem seitlichen Aufnahmefach
- Figur 5: Behälter zur Aufnahme von Wasser mit Dampferzeugereinrichtung zum Einschub in einen Garraum
- Figur 6: Dampfgargerät mit Behälter im Garraum
- Figur 7: Behälter mit Abdeckhaube
- Figur 8: Abdeckhaube als Kondensatauffangbehälter

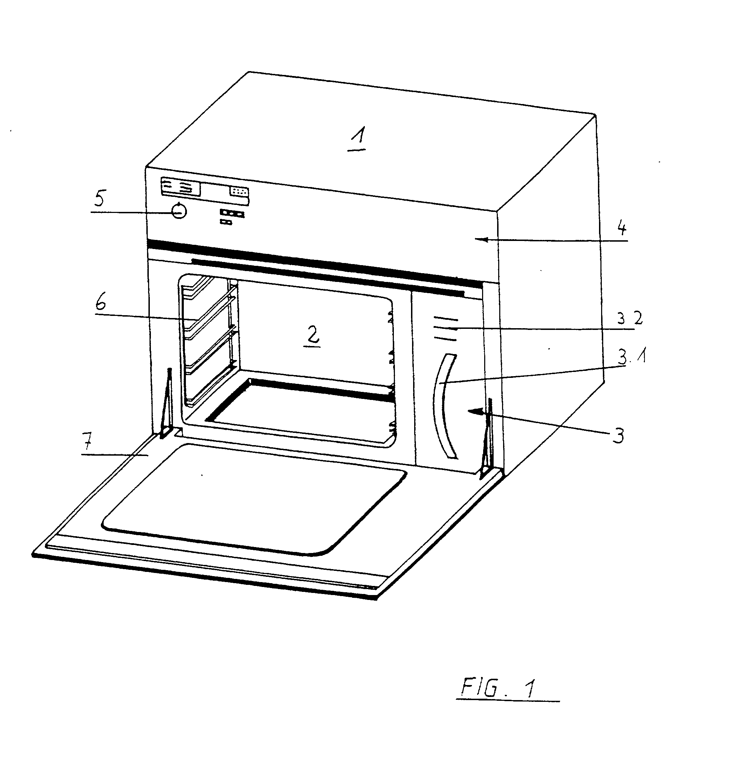

Die Figur 1 zeigt ein Haushaltgerät (1) zum drucklosen Dampfgaren mit einem seitlich neben dem Garraum (2) angeordneten Behälter (3) zur Aufnahme von Wasser mit einer Dampferzeugereinrichtung. Das Haushaltgerät (1) weist eine nach unten klappbare Garraumtür (7) auf, welche im geöffneten Zustand als Abstellfläche nutzbar ist. Die Garraumtür (7) kann aber ebenso auch seitlich oder oben angeschlagen sein. Oberhalb des Garraumes (2) ist eine Bedienblende (4) angeordnet, welche mindestens Bedienelemente (5) zur Einstellung der Betriebsarten aufweist. Gleichermaßen kann die Bedienblende (4) aber auch bei anderer Aufteilung der Gerätebestandteile (2, 3, 7) bzw. Anordnung des Behälters (3) in einem seitlichen Bereich des Haushaltgerätes (1) sinnvoll angeordnet sein. Der Behälter (3) weist an seiner Vorderseite ein Griffelement (3.1) auf. Außerdem kann eine Kennzeichnung (3.2) zur Füllstandshöhe an dem Behälter (3) derart angeordnet sein, dass sie (3.2) auch im eingeschobenen Zustand an der Gerätefront sichtbar ist. Der Behälter (3) sollte dazu mindestens im vorderen Bereich transparent ausgestaltet sein, damit der Füllstand auch von außen erkennbar ist. Der Behälter (3) ist zum Befüllen mit bzw. Entleeren von Wasser vollständig aus dem Haushaltgerät (1) herausnehmbar. Das erleichtert das Entfernen von Restwasser und Entkalkungsmittel aus dem Behälter (3) über einer Spüle. Ein Entleeren des Behälters (3) sollte möglichst nach jedem Dampfgarvorgang erfolgen, um Kalkablagerungen und Verkeimung zu minimieren. Der Garraum (2) weist seitliche Aufnahmegitter (6) auf, in welche Garbehälter direkt einschiebbar sind. Es können aber auch kleinere Garbehälter ausgewählt werden, welche auf einer Abstellfläche in den Garraum (2) gebracht werden. Dabei ist die Abstellfläche in die Aufnahmegitter (6) einzuschieben. Die Garbehälter sind zur besseren Übersicht hier nicht dargestellt.

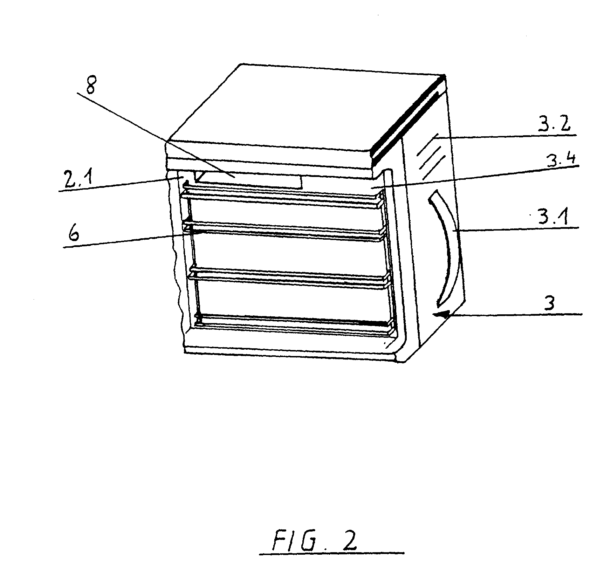

Die Figur 2 zeigt einen Ausschnitt des Garraumes (2) mit seitlich daneben angeordnetem Behälter (3) in Sicht auf eine Seitenwand (2.1) des Garraumes (2) mit einer Dampfverbindung von der Öffnung (10) im Behälter (3) zur Durchführungsöffnung (8) im Garraum (2). An der Seitenwand (2.1) sind Aufnahmegitter (6) angeordnet. Der Übergang des Dampfes aus dem Behälter (3) in den Garraum (2) erfolgt über die Durchführungsöffnung (8) in einer Garraumwand. Diese Durchführungsöffnung (8) ist als eine Dampfverbindung direkt mit der Öffnung (10) im Behälter verbunden, welche im Beispiel gleichzeitig zum Befüllen bzw. Entleeren des Behälters (3) vorgesehen ist. Die Öffnung (10) ist hier als eine teilweise vertieft ausgeschnittene Seitenwand (3.4) des Behälters (3) ausgebildet und korrespondiert mit der Durchführungsöffnung (8) im Garraum direkt. Sie kann aber ebenso als eine in beliebiger Höhe angeordnete zusätzliche Öffnung (10) im Behälter (3) ausgebildet und mit der Durchführungsöffnung (8) im Garraum (2) verbunden sein.

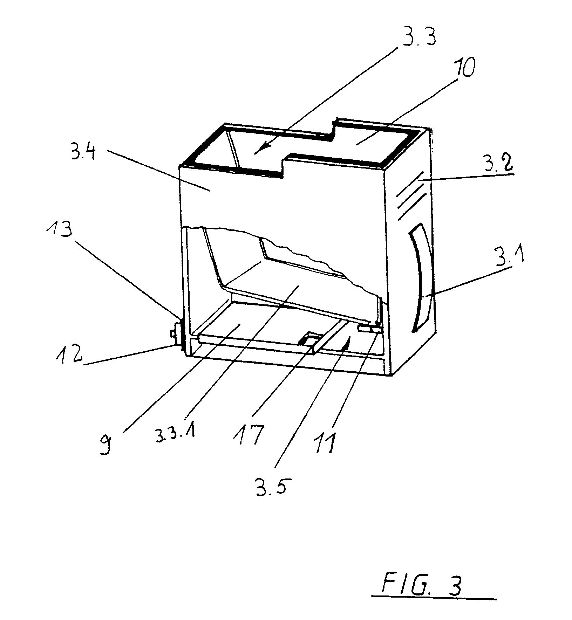

In der Figur 3 ist ein seitlich neben dem Garraum anzuordnender Behälter (3) zur Aufnahme von Wasser mit einer gleichzeitig vorhandenen Dampferzeugereinrichtung gezeigt, wobei innerhalb des Behälters (3) eine Trennung von Kaltwasser und erhitztem Wasser erfolgt. Der Behälter (3) weist unterhalb eines durch mindestens eine Trennwand (3.3.1) abgeteilten Kaltwassergefäßes (3.3) einen kleinen Aufnahmeraum für Wasser auf, welcher mit einer Heizeinrichtung (9) als Dampferzeuger (3.5) ausgestattet ist. Die Heizeinrichtung (9) erhitzt das wenige, in diesem Bereich des Behälters (3) vorhandene Wasser bis zum Verdampfen. Der als großvolumiges Kaltwassergefäß (3.3) vom kleinvolumigen Dampferzeuger (3.5) abgeteilte Innenbehälter gewährleistet, dass die jeweils zu erhitzende Wassermenge im Dampferzeuger (3.5) nur gering ist, wodurch eine schnelle Dampferzeugung und ein energiesparendes Garen ermöglicht wird. Es ist keine mechanische Zuflussregelung für einen Wassernachlauf in den Dampferzeuger (3.5) erforderlich, da automatisch Wasser aus dem Kaltwassergefäß (3.3) in den Dampferzeuger (3.5) gelangt. Eine Füllstandsüberwachungseinrichtung (17), welche der Gerätesteuerung berührungslos das Unterschreiten eines minimalen Füllstandes mitteilt, erhöht die Sicherheit bei der Benutzung und schließt ein Trockengehen der Heizeinrichtung (9) im Dampferzeuger (3.5) aus. Mindestens der Behälterraum des Dampferzeugers (3.5) ist doppelwandig ausgebildet, wobei aber auch zusätzlich noch die Trennwand (3.3.1) bzw. ein Kaltwassergefäß (3.3) im Inneren mehrwandig angeordnet sein sollte. Ein Trennung innerhalb des Behälters (3) hat den Vorteil, dass der Behälter (3) nach außen hin thermisch isoliert ist und keine Verbrennungsgefahr besteht, falls der Behälter (3) während oder gleich nach einem Garvorgang herausgenommen werden sollte. Der Behälter (3) weist oberhalb eines maximal möglichen Wasserspiegels mindestens eine Öffnung (10) auf, welche zum Befüllen mit Wasser und/oder als Dampfverbindung zum Garraum (2) nutzbar ist.

Aber auch ein Behälter (3) mit Heizeinrichtung (9) ohne Trennwand (3.3.1) ist neben dem Garraum einsetzbar, müsste aber dagegen zum Dampferzeugen die gesamte Wassermenge erhitzen, bevor Dampf entsteht. Außerdem wäre ein einwandiger Behälter einsetzbar, der jedoch gesondert zu isolieren wäre, um Wärmeverluste zu vermeiden und den Energieverbrauch auf einem geringen Niveau zu halten. Der Behälter (3) ist über eine im oberen Seitenbereich des Kaltwassergefäßes (3.3) befindliche Öffnung (10) als Dampfverbindung mit einer Durchführungsöffnung (8) im Garraum (2) verbunden, um den Dampfaustritt zum Garraum (2) zu gewährleisten. Bevor der Dampf in den Garraum (2) gelangen kann, wird er insbesondere durch die geometrische Ausbildung und Anordnung des Kaltwassergefäßes (3.3) im Inneren des Dampferzeugers (3.5) umgelenkt, so dass selbst mit dem Dampfstrom mitgerissene Wassertropfen nicht in den Garraum (2) gelangen können. Die Heizeinrichtung (9) ist zum Beispiel so angeordnet, dass über einem großen Querschnitt Wasser verdampfen kann. Es steht dagegen aber nur ein kleiner Querschnitt für den aufsteigenden Dampf zur Verfügung. Die Tropfen können zwar noch mit dem Dampf hochgerissen werden, jedoch können sie nicht über eine Dampfverbindung durch die Öffnung (10) zur Durchführungsöffnung (8) in den Garraum gelangen, sondern sie werden wieder zurück zur Heizeinrichtung (9) geführt. Die Bodenfläche (3.3.1) des Kaltwassergefäßes (3.3) sollte vorzugsweise schräg ausgebildet sein. Damit ist gewährleistet, dass nur wenig vorhandenes Wasser im Kaltwassergefäß (3.3) durch eine in einer Ecke der Bodenfläche angeordnete Öffnung (15) in den Dampferzeuger (3.5) gelangen kann.

Damit die Heizeinrichtung (9) nicht während des Betriebes trocken gehen und zerstört werden kann, sollte eine Niveauüberwachung im Dampferzeuger (3.5) erfolgen. Dazu ist beispielsweise eine Füllstandsüberwachung (17) am oder in Nähe des Heizeinrichtung (9) vorhanden. Eine thermische Trennvorrichtung (11) ist an der Unterseite der Bodenfläche (3.3.1) angeordnet, welche die Wasserzufuhr zum Dampferzeuger (3.5) steuert. Jede Möglichkeit zur Niveauregelung des Wassers ist einsetzbar. Über eine thermische Trennvorrichtung (11) gelangt nach dem Verdampfen von aufgeheiztem Wasser kaltes Wasser aus dem Kaltwassergefäß (3.3) nach unten in den Dampferzeuger (3.5). Die elektrische Versorgung der Heizeinrichtung (9) wird durch einen Steckkontakt (12) an der Außenseite des Behälters (3) sichergestellt. Eine Dichtung (13) trennt den Steckkontakt (12) dampfseitig vom Garraum (2). Beim Ein- bzw. Ausschieben des Behälters (3) wird gleichzeitig der Steckkontakt (12) aus der Steckdose (14) gezogen und die elektrische Zuleitung unterbrochen. Das Kontaktelement (12) befindet sich an einer Außenseite des Behälters. Ein Ausschnitt in einer Behälterwand (3.4) zeigt den Wasserbehälter (3.3), welcher oberhalb des Dampferzeugers (3.5) im Behälter (3) angeordnet ist. Unterhalb des Wasserbehälters (3.3) befindet sich die thermische Trennvorrichtung (11). Als Trennvorrichtung (11) ist beispielsweise ein Schwimmer, ein Magnetventil oder eine Vogeltränke einsetzbar. Die Trennvorrichtung (11) sollte möglichst nicht direkt auf der Heizeinrichtung (9) im Dampferzeuger (3.5) aufliegen. Dadurch befindet sich immer nur wenig Wasser im Dampferzeuger (3.5), welches sich schnell aufheizen und verdampfen lässt.

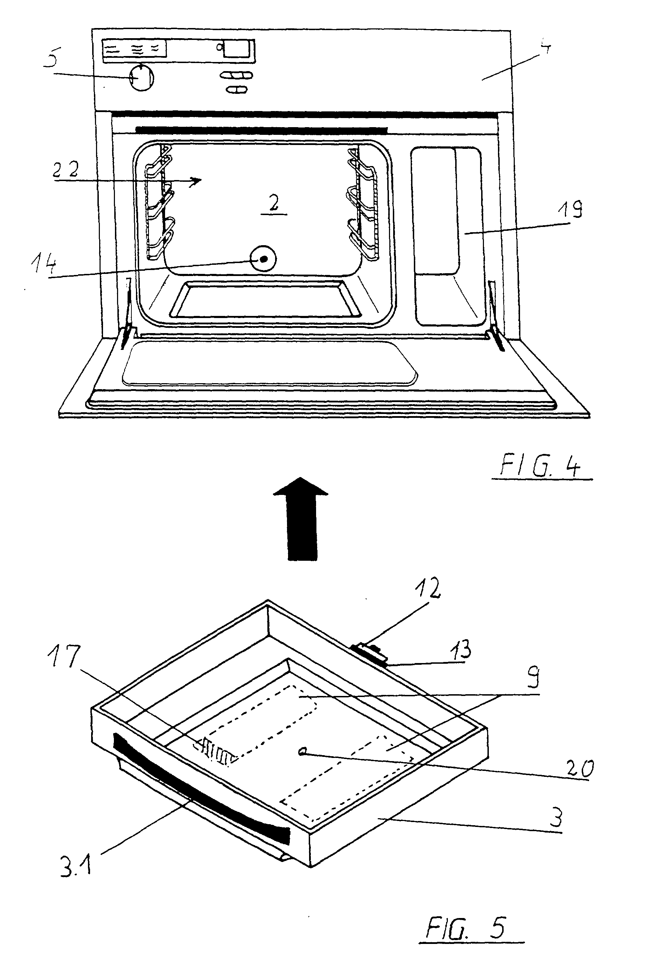

In der Figur 4 ist ein Haushaltgerät (1) zum drucklosen Dampfgaren mit Bedienelementen (5) an einer Bedienblende (4) und einem darunter angeordneten, seitlichem Aufnahmefach (19) dargestellt, wobei der Behälter (3) in den Bodenbereich des Garraums (2) einschiebbar ist. Ein seitlich neben dem Garraum (2) im Gehäuse angeordnetes offenes Aufnahmefach (19) kann beispielsweise zum Aufbewahren von nicht benötigten Garbehältern genutzt werden. Das Aufnahmefach (19) kann auch mit einer Tür o. Ä. verschließbar ausgestaltet werden. An der hinteren Garraumwand (2.2) ist eine Steckdose (14) angeordnet, in welche der am Behälter (3) befindliche Steckkontakt (12) eingreift und die Heizeinrichtung (9) mit elektrischer Energie versorgt.

Die Figur 5 zeigt einen Behälter (3) zur Aufnahme von Wasser mit Dampferzeugereinrichtung. Dieser Behälter (3) kann für eine Aufnahme im Garraum (2), im Gegensatz zu einem Behälter (3) außerhalb des Garraumes (2), nur einwandig ausgebildet sein, ohne dass es zu nennenswerten Energieverlusten kommen würde. Der Behälter (3) im Garraum (2) ist mit einem Steckkontakt (12) ausgerüstet, welcher im eingeschobenen Zustand in die Steckdose (14) in der Garraumwand (2.2) eingreift und eine Spannungsversorgung zur Heizeinrichtung (9) herstellt. Eine Dichtung (13) trennt den Steckkontakt (12) dampfseitig vom Garraum (2). Im Bodenbereich des einschiebbaren Behälters (3) ist mindestens eine Heizeinrichtung (9) angeordnet. Hierzu ist jede zum Aufheizen von Wasser bekannte Heizeinrichtung (9) verwendbar. Innerhalb des Behälters aufgebrachte Flächenheizkörper sind optisch und reinigungstechnisch hierzu besonders gut geeignet. Zusätzlich sollte eine hier nicht näher dargestellte Füllstandsüberwachung (17) an bzw. in der Nähe der Heizeinrichtung (9) vorhanden sein, damit die Heizeinrichtung (9) nicht trocken heizen kann, sondern dass sie bei einem Minimalwasserstand automatisch abgeschaltet wird. Als Füllstandsüberwachungseinrichtung (17) ist beispielsweise ein PTC-Widerstand einsetzbar, welcher auf bzw. in Nähe der Heizeinrichtung (9) positioniert ist. Der Handgriff (3.1) befindet sich an der Vorderseite des Behälters (3), wobei er z.B. als Griffleiste mittig an der Vorderseite oder am oberen Rand ausgebildet sein kann. Der Behälter (3) ist mit einer Verschlusseinrichtung (20) ausgerüstet, welche vorzugsweise an seinem tiefsten Punkt angeordnet ist. Diese Verschlusseinrichtung (20) ist von außen für Wasser durchgängig ausgestaltet. Dadurch kann von den Gargutwänden abtropfendes Kondensat, welches nicht direkt wieder in den Behälter gelangen kann, von unten in den Behälter einströmen und wieder verheizt werden. Dieses Kondensat weist bereits etwa die im Garraum (2) vorherrschende Temperatur auf und es muss daher weniger Energie zum erneuten Verdampfen aufgewendet werden.

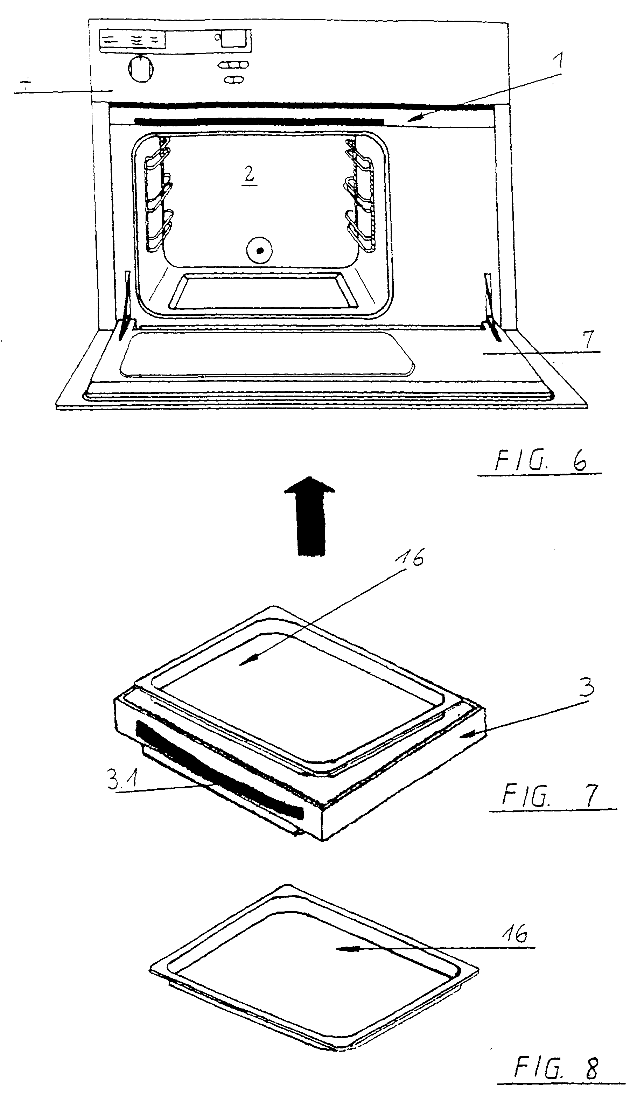

Aus der Figur 6 ist ein Haushaltgerät (1) zum drucklosen Dampfgaren zur Aufnahme eines Behälters (3) für Wasser mit Dampferzeugereinrichtung im Garraum (2) ersichtlich, welches ohne ein seitliches Aufnahmefach (19) ausgestattet ist. Der seitliche Bereich neben dem Garraum (2) ist geschlossen ausgebildet. Hinter der Vorderfront sind beispielsweise die elektronischen Bestandteile des Haushaltgerätes (1) unterzubringen und dann die Bedienblende (4) entsprechend seitlich anzuordnen. Der Garraum (2) kann aber auch ohne das seitliche Aufnahmefach (19) vergleichsweise vergrößert bzw. das gesamte Haushaltgerät (1) in der Höhe auch verändert werden.

In der Figur 7 ist eine Abdeckhaube (16) dargestellt, welche in bzw. auf den Behälter (3) gesetzt wird. Die Abdeckhaube (16) ist geschlossen ausgebildet und nimmt verunreinigtes Kondensat auf, welches vom Gargut abtropft. Dieses Kondensat wird für eine eventuelle weitere Verwendung, z.B. zum Bereiten einer Soße, oder bis zum abschließenden Entleeren der Abdeckhaube (16) gesammelt. Sauberes Kondensat, welches sich an den Garraumwänden bildet und von dort abtropft, gelangt neben der Abdeckhaube (16) entweder direkt oder über den Garraumboden und die Verschlusseinrichtung (20) von unten wieder in den Behälter (3). Dort wird es erneut bis zum Verdampfen erhitzt.

Die Figur 8 offenbart einen Behälter (3) zur Aufnahme von Wasser mit Dampferzeugereinrichtung mit der Abdeckhaube (16). Der Behälter (3) wird in den Garraum (2) eingebracht. Kondensat, welches vom Gargut tropft, wird auf der Abdeckhaube (16) mit geschlossener Bodenfläche aufgefangen. Dazu ist diese derart geformt, dass ihre Oberfläche zur Kondensataufnahme leicht nach innen gewölbt ausgebildet ist. Das so gesammelte Kondensat kann nach dem Garen weiterverarbeitet werden, beispielsweise bei der Bereitung von Soßen. Das an den Wänden anfallende saubere Kondensat gelangt dagegen direkt wieder in den Behälter (3) und wird dort erneut bis zum Verdampfen aufgeheizt. Durch diesen Kreislauf verringern sich zum Garen sowohl der Wasser- als auch der Energieverbrauch des Haushaltgerätes (1).

## Patentansprüche

1. Haushaltgerät zum drucklosen Dampfgaren mit einem Gehäuse und einem darin angeordneten Garraum, einem Wasser- sowie einem Dampferzeugerbehälter, welcher mindestens eine Heizeinrichtung, eine elektrische Zuleitung und eine Dampfverbindung zum Garraum aufweist,
**dadurch gekennzeichnet,**
**dass** ein aus dem Haushaltgerät (1) entnehmbarer Behälter (3) als Wasserbehälter (3.3) mit Dampferzeuger (3.5) ausgebildet ist, und
**dass** an dem Behälter (3) ein Steckkontakt (12) zur Trennung von der elektrischen Zuleitung angeordnet ist, und
**dass** eine Dichtung (13) den elektrischen Steckkontakt (12) dampfseitig vom Garraum trennt.

2. Haushaltgerät nach Anspruch 1,
**dadurch gekennzeichnet,**
**dass** der Behälter (3) eine Öffnung (10) aufweist, welche zum Befüllen mit Wasser und gleichzeitig als direkte Dampfverbindung zu einer Durchführungsöffnung (8) im Garraum (2) ausgebildet ist.

3. Haushaltgerät nach Anspruch 1 oder 2,
**dadurch gekennzeichnet,**
**dass** in dem Behälter (3) mindestens eine Trennwand (3.3.1) zwischen kaltem und erwärmtem Wasser angeordnet ist, welche ein innenliegendes Kaltwassergefäß (3.3) oberhalb eines Dampferzeugers (3.5) abteilt.

4. Haushaltgerät nach mindestens einem der Ansprüche 1 bis 3,
**dadurch gekennzeichnet,**
**dass** der Behälter (3) und/oder die Trennwand (3.3.1) mindestens doppelwandig ausgebildet ist.

5. Haushaltgerät nach mindestens einem der Ansprüche 1 bis 4,
**dadurch gekennzeichnet,**
**dass** unterhalb des Kaltwassergefäßes (3.3.) und oberhalb der Heizeinrichtung (9) eine thermische Trennungsvorrichtung (11) angeordnet ist.

6. Haushaltgerät nach mindestens einem der Ansprüche 1 bis 5,
**dadurch gekennzeichnet,**
**dass** die Trennungsvorrichtung (11) als Schwimmer, Magnetventil oder Vogeltränke ausgebildet ist.

7. Haushaltgerät nach mindestens einem der Ansprüche 1 bis 6,
**dadurch gekennzeichnet,**
**dass** die Trennungsvorrichtung (11) nicht direkt auf der Heizeinrichtung (9) aufliegt.

8. Haushaltgerät nach mindestens einem der Ansprüche 1 bis 7,
**dadurch gekennzeichnet,**
**dass** an oder in Nähe der Heizeinrichtung (9) eine Füllstandsüberwachungseinrichtung (17) angeordnet ist.

9. Haushaltgerät nach mindestens einem der Ansprüche 1 bis 8,
**dadurch gekennzeichnet,**
**dass** die Füllstandsüberwachungseinrichtung (17) an der Heizeinrichtung (9) als PTC-Widerstand ausgebildet ist.

10. Haushaltgerät nach mindestens einem der Ansprüche 1 bis 9,
**dadurch gekennzeichnet,**
**dass** die Dampfverbindung (10, 8) zum Garraum (2) derart angeordnet ist, dass mit dem Dampf mitgerissene Wassertropfen zurück in den Dampferzeuger (3.5) gelangen.

11. Haushaltgerät nach mindestens einem der Ansprüche 1 bis 10,
**dadurch gekennzeichnet,**
**dass** die Dichtung (13) am Steckkontakt (12) oder am Behälter (3) oder am Gehäuse des Haushaltgerätes (1) angeordnet ist.

12. Haushaltgerät nach mindestens einem der Ansprüche 1 bis 11,
**dadurch gekennzeichnet,**
**dass** der Behälter (3) innerhalb oder außerhalb des Garraums (2) angeordnet ist.

13. Haushaltgerät nach mindestens einem der Ansprüche 1 bis 12,
**dadurch gekennzeichnet,**
**dass** der Behälter (3) im Bodenbereich des Garraums (2) angeordnet ist.

14. Haushaltgerät nach mindestens einem der Ansprüche 1 bis 13,
**dadurch gekennzeichnet,**
**dass** der Behälter (3) wenigstens zum überwiegenden Teil mit einer Abdeckhaube (16) überdeckt ist.

15. Haushaltgerät nach Anspruch 13,
**dadurch gekennzeichnet,**
**dass** der Behälter (3) im unteren Bereich mit einer Verschlusseinrichtung (20) ausgebildet ist.

## Claims

1. Domestic appliance for pressureless steam cooking, having a housing and a cooking chamber disposed therein, a water container and a steam generating container, which includes at least one heating means, an electrical supply line and a steam. communication with the cooking chamber, **characterised in that** a container (3), which is removable from the domestic appliance (1), is in the form of a water container (3.3) with a steam generator (3.5), and **in that** a plug contact (12) is disposed on the container (3) for separation from the electrical supply line, and **in that** a seal (13) separates the electrical plug contact (12) at the steam side from the cooking chamber.

2. Domestic appliance according to claim 1, **characterised in that** the container (3) has an opening (10), which is provided for enabling filling with water and simultaneously provides direct steam communication with a lead-in aperture (8) in the cooking chamber (2).

3. Domestic appliance according to claim 1 or 2, **characterised in that** at least one dividing wall (3.3.1) is disposed in the container (3) between cold and heated water and divides an internally situated cold-water vessel (3.3) above a steam generator (3.5).

4. Domestic appliance according to at least one of claims 1 to 3, **characterised in that** the container (3) and/or the dividing wall (3.3.1) is configured to be at least double-walled.

5. Domestic appliance according to at least one of claims 1 to 4, **characterised in that** a thermal separation apparatus (11) is disposed beneath the cold-water vessel (3.3) and above the heating means (9).

6. Domestic appliance according to at least one of claims 1 to 5, **characterised in that** the separation apparatus (11) is in the form of a float, solenoid valve or bird bath.

7. Domestic appliance according to at least one of claims 1 to 6, **characterised in that** the separation apparatus (11) does not rest directly on the heating means (9).

8. Domestic appliance according to at least one of claims 1 to 7, **characterised in that** a filling level monitoring means (17) is disposed on or in the vicinity of the heating means (9).

9. Domestic appliance according to at least one of claims 1 to 8, **characterised in that** the filling level monitoring means (17) on the heating means (9) is in the form of a PTC resistor.

10. Domestic appliance according to at least one of claims 1 to 9, **characterised in that** the steam communication (10, 8) with the cooking chamber (2) is disposed in such a manner that water droplets, which are entrained with the steam, pass back into the steam generator (3.5).

11. Domestic appliance according to at least one of claims 1 to 10, **characterised in that** the seal (13) is disposed on the plug contact (12) or on the container (3) or on the housing of the domestic appliance (1).

12. Domestic appliance according to at least one of claims 1 to 11, **characterised in that** the container (3) is disposed internally or externally of the cooking chamber (2).

13. Domestic appliance according to at least one of claims 1 to 12, **characterised in that** the container (3) is disposed in the bottom region of the cooking chamber (2).

14. Domestic appliance according to at least one of claims 1 to 13, **characterised in that** the container (3) is covered, at least for the most part, with a cover (16).

15. Domestic appliance according to claim 13, **characterised in that** the container (3) is provided in the lower region with a closure means (20).

## Revendications

1. Appareil ménager pour cuire à la vapeur sans pression, comprenant une carrosserie renfermant un espace de cuisson, un réservoir d'eau, ainsi qu'un réservoir générateur de vapeur comportant au moins un dispositif de chauffe, une alimentation électrique et une conduite de vapeur menant à l'espace de cuisson, **caractérisé en ce qu'**un réservoir (3) pouvant être extrait de l'appareil ménager (1) est réalisé en tant que réservoir d'eau (3.3) avec générateur de vapeur (3.5), et **en ce qu'**un contact à fiche (12) est disposé sur le réservoir (3) pour le séparer de l'alimentation électrique, et **en ce qu'**un joint (13) isole le contact électrique à fiche (12) de la vapeur de l'espace de cuisson.

2. Appareil ménager selon la revendication 1, **caractérisé en ce que** le réservoir (3) présente une ouverture (10) qui est réalisée simultanément pour le remplir d'eau et pour faire la jonction avec un orifice de sortie de la vapeur (8) dans l'espace de cuisson (2).

3. Appareil ménager selon la revendication 1 ou 2, **caractérisé en ce que** dans le réservoir (3) est placée au moins une paroi de séparation (3.3.1) entre l'eau froide et l'eau chauffée, qui délimite un récipient d'eau froide interne (3.3) au-dessus d'un générateur de vapeur (3.5).

4. Appareil ménager selon au moins l'une des revendications 1 à 3, **caractérisé en ce que** le réservoir (3) et/ou la paroi de séparation (3.3.1) sont réalisés au moins à double paroi.

5. Appareil ménager selon au moins l'une des revendications 1 à 4, **caractérisé en ce qu'**au-dessous du réservoir d'eau froide (3.3) et au-dessus du dispositif de chauffe (9) est situé un dispositif de séparation thermique (11).

6. Appareil ménager selon au moins l'une des revendications 1 à 5, **caractérisé en ce que** le dispositif de séparation (11) est réalisé en tant que flotteur, électrovanne ou abreuvoir à oiseaux.

7. Appareil ménager selon au moins l'une des revendications 1 à 6, **caractérisé en ce que** le dispositif de séparation (11) ne repose pas directement sur le dispositif de chauffe (9).

8. Appareil ménager selon au moins l'une des revendications 1 à 7, **caractérisé en ce qu'**un dispositif de contrôle du niveau de remplissage (17) est disposé sur ou à proximité du dispositif de chauffe (9).

9. Appareil ménager selon au moins l'une des revendications 1 à 8, **caractérisé en ce que** le dispositif de contrôle du niveau de remplissage (17) sur le dispositif de chauffe (9) est réalisé en tant que résistance CTP.

10. Appareil ménager selon au moins l'une des revendications 1 à 9, **caractérisé en ce que** les éléments (10, 8) permettant à la vapeur de rejoindre l'espace de cuisson (2) sont disposés de telle sorte que des gouttes d'eau emportées par la vapeur reviennent dans le générateur de vapeur (3.5).

11. Appareil ménager selon au moins l'une des revendications 1 à 10, **caractérisé en ce que** le joint (13) est placé au niveau du contact enfichable (12) ou sur le réservoir (3) ou sur la carrosserie de l'appareil ménager (1).

12. Appareil ménager selon au moins l'une des revendications 1 à 11, **caractérisé en ce que** le réservoir (3) est situé dans l'espace de cuisson (2) ou en dehors de celui-ci.

13. Appareil ménager selon au moins l'une des revendications 1 à 12, **caractérisé en ce que** le réservoir (3) se trouve dans la sole de l'espace de cuisson (2).

14. Appareil ménager selon au moins l'une des revendications 1 à 13, **caractérisé en ce qu'**au moins la majeure partie du réservoir (3) est recouverte d'un capot (16).

15. Appareil ménager selon la revendication 13, **caractérisé en ce que** le réservoir (3) est réalisé muni d'un dispositif de fermeture (20) dans la partie inférieure.
